# EUROPEAN PATENT SPECIFICATION

(11) **EP 1 326 172 B1**
(45) Date of publication and mention of the grant of the patent: **30.09.2009**
(21) Application number: 02102889.9
(22) Date of filing: 24.12.2002
(51) Int. Cl.: G06F 13/37

(54) **Communication Method and Apparatus for Assigning Device Identifier**
Übertragungsverfahren und -vorrichtung zur Zuteilung von Gerätsidentifikatoren
Méthode et appareil de communication et d'allocation d'identificateur de dispositif

(30) Priority: 28.12.2001 JP 2001400387
(43) Date of publication of application: 09.07.2003
(73) Proprietor: Texas Instruments Incorporated, Dallas, Texas 75251 (US)
(72) Inventor: Satoh, Masahito, 245-0004, Yokohama, Kanagawa (JP); Kondoh, Hitoshi, 224-0032, Yokohama, Tuzuki-Ku (JP); Shigetoshi, Nakao, 245-0004, Yokohama, Komae-shi (JP)
(74) Representative: Holt, Michael

(56) References cited:
- WO-A-94/16382
- US-A- 5 179 670
- US-A- 5 928 343
- PATENT ABSTRACTS OF JAPAN vol. 1995, no. 03, 28 April 1995 (1995-04-28) & JP 06 348649 A (FUJITSU LTD), 22 December 1994 (1994-12-22)

## Description

### FIELD OF THE INVENTION

The present invention relates to a communication method and apparatus for circuits, devices, or other systems having elements connected in a daisy chain.

### BACKGROUND OF THE INVENTION

Communication between the various types of integrated circuit chips, units, equipment, etc., that comprise circuits, apparatuses, and other systems requires some means of identifying these constituent parts. There are various methods for identifying these devices of a system. The first method is to use the intrinsic identifier of a device as the device identifier or address for communication within the system. The intrinsic identifier of a device, such as an integrated circuit chip, can be a number, etc. burned in the ROM during manufacturing. Specifications for using such intrinsic device identifiers include JTAG specifications used in testing chip assemblies on boards and IIC (such as: Audio I/F (IIC)) specifications used for many audio products. The second method is to assign an address from outside to the branch, leaf device. The IEEE1394 specification is an example of this method. The third method is to preset an identifier, that is, an address for a device. One such example is the SCSI-2 specification, in which a specific address is preset by an operating system for printers, displays, or other devices.

In the case of the aforementioned first method using the intrinsic identifier of the device, especially in the case of an integrated circuit chip, the intrinsic identifier depends on the type determined by the manufacturer of the device and the particular functions of the device. An intrinsic device identifier is assigned to each device and is written in the ROM of the device. Consequently, different device identifiers will be assigned to the same type of device manufactured by different manufacturers. As a result, devices used in audio products or other systems cannot be easily replaced with the same types of devices produced by different manufacturers. To make such substitution, the device identifiers in the system of the devices before the substitution must be replaced with the device identifiers of the devices after the substitution. This entails rewriting software, rewriting the contents of ROMs, etc. Another problem is that when multiple devices of the same type are used in a system, the devices assigned with the same device identifier cannot be used. In order to solve this problem, multiple device identifiers must be burned into the ROM for one device so that one of them can be selected when the device is used. Also, in a system that requires other device identifiers besides the intrinsic device identifiers of the devices, new device identifiers or addresses must be assigned to the devices. In addition, the intrinsic identifier of a device is a very long number because it also includes the part for identifying the manufacturer.

In the aforementioned second method, since it is necessary to assign addresses from the outside to the devices, hardware and software for address assignment are required.

In the aforementioned third method, since the addresses used by given devices are preset in an operating system, etc., assigning of addresses is limited. Also, the number of devices that can be connected to the system is limited.

Thus, one purpose of the present invention is to provide a communication method and apparatus that can automatically assign identifiers for identifying the numbers of multiple devices in a system to the devices in the system during communication in circuits, apparatuses, and other systems.

Another purpose of the present invention is to provide a communication method and apparatus that can automatically assign identifiers for identifying the sequential numbers in a prescribed sequence, such as the allocation order of a sharable resource, to the devices in a system during communication within the aforementioned system.

Yet another purpose of the present invention is to provide a variable time-division multiplex communication method and apparatus using the aforementioned identifiers in the aforementioned system.

International patent application, publication no. WO94/16382 describes a method for assigning identification codes to a plurality of peripheral devices, comprising the steps of asserting a first signal to all of the peripheral devices to indicate the start of an identification code assignment procedure, and asserting a series of pulses to all of the peripheral devices beginning after the assertion of the first signal.

Japanese patent application, publication no. 06348649, describes a control system for enabling many slave devices to acquire the right of using a synchronous bus under the control of a master device.

### SUMMARY OF THE INVENTION

According to a first aspect of the invention, there is provided a communication system for carrying out communication among multiple devices, the multiple devices comprising a master device and one or more groups of multiple slave devices, said communication system comprising: buses that connect the multiple devices to each other and daisy chain connection lines that connect the multiple devices into a daisy chain; wherein the buses connect the master device and each of the one or more groups of multiple slave devices; wherein the daisy chain connection lines connect each of the one or more groups of multiple slave devices in a daisy chain; wherein the daisy chain connection lines are used to assign a device identifier to each of the multiple slave devices for identifying the number of each device among the multiple slave devices or identifying the number of a device in a prescribed order in the system, **characterized in that** the communication is carried out as time-division multiplex communication.

According to a second aspect of the invention, there is provided a device identifier assignment method for assigning device identifiers to multiple devices amongst which time division multiplex communication is carried out, said method comprises the steps:
connecting the multiple devices in a daisy chain;
sending a device identifier assigning token at a first time point from the most upstream device located in the most upstream portion of the daisy chain among the multiple devices to the downstream of the daisy chain, with the most upstream device having the first device identifier;
each of the downstream devices located downstream of the daisy chain, receiving the device identifier assigning token at a second time point; and
each downstream device determining the given device identifier that is different from the first device identifier on the basis of the time difference between the first and second time points;
identifying the multiple devices by using the aforementioned first device identifier of the most upstream device and each of the device identifiers that are determined for each of the downstream devices and that are different from the first device identifier.

### BRIEF DESCRIPTION OF THE DRAWINGS

FIG. 1 is a block diagram illustrating a communication system with the basic configuration disclosed in the embodiment of the present invention.
FIG. 2 is a block diagram illustrating an audio multi-chip system B as an embodiment of the communication system shown in FIG. 1.
FIG. 3 is a block diagram illustrating the device ID assignment circuit and the time-slot allocating circuit in each slave device shown in FIG. 2.
FIG. 4 is a diagram illustrating the communication frame for variable time-division multiplex communication (VTDMCA) used in the system shown in FIG. 2 as well as the format during initialization and operation of the data (PDI input and PDO output) transmitted in the frame.
FIG. 5 is a diagram illustrating the structure of the command field and expanded command field in the transmission format shown in FIG. 4. (a) shows the command field, (b) shows the expanded command field, and (c) shows the status field.
FIG. 6 is a flow chart illustrating the operation of the entire audio multi-chip system B shown in FIG. 2.
FIG. 7 is a diagram illustrating the timing of clock LRCK and BCK used for determining VTDMCA mode.
FIG. 8 is a timing diagram illustrating various types of signals in the device ID assignment sequence.
FIG. 9 is a circuit diagram illustrating the details of the device ID assignment circuit 70 shown in FIG. 3.
FIG. 10 is a timing diagram explaining the operation of the device ID assignment circuit 70 shown in FIG. 9 for the header device (most upstream device).
FIG. 11 is a timing diagram explaining the operation of the device ID assignment circuit 70 shown in FIG. 9 for the second device on the downstream side of the header device.
FIG. 12 is a timing diagram explaining the operation of the entire time-slot allocating circuit group shown in FIG. 3.
FIGS. 13 is a circuit diagram illustrating, with (a) and (b) together, the details of the time-slot allocating circuit 72 shown in FIG. 3.
FIG. 14 is a circuit diagram illustrating the details of the header token production circuit shown in FIG. 13.
FIG. 15 is a circuit diagram illustrating the details of the token propagation circuit shown in FIG. 13.
FIG. 16 is a timing diagram illustrating various types of signals in the time-slot allocating circuit in the case when the header device uses channel ch1 but not channel ch2.
FIG. 17 is a timing diagram illustrating various types of signals in the time-slot allocating circuit in the case when the header device uses channels ch1-ch4.
FIG. 18 is a timing diagram illustrating various types of signals in the time-slot allocating circuit in the case when the header device uses two channels by means of the high enable signals of ch1 and ch3.
FIG. 19 is a timing diagram illustrating various types of signals in the time-slot allocating circuit in the case when the ch1 enable signal is low and only the ch2 enable signal is high in the header device.
FIG. 20 is a timing diagram illustrating various types of signals in the time-slot allocating circuit in the case when all of the ch enable signals in the header device are low.
FIG. 21 is a timing diagram illustrating receiving/transmitting of SA token between multiple devices.
FIG. 22 is a block diagram illustrating a system example, in which the same device is connected in two daisy chains.

### REFERENCE NUMERALS AND SYMBOLS AS SHOWN IN THE DRAWINGS

In the figures, 1 represents a master device, 3-1∼N a slave device group, 5 a bus, 30-1-1∼N slave devices, 30-2-1∼N slave devices, 7-1∼N daisy chain connection lines, 1B DSP, 30-1-1B∼NB slave devices, 30-2-1B∼NB slave devices, DC1B a daisy chain, 50B a bus conductor, 52B a bus conductor, 60 a conductor, 62 a conductor, 70 a device ID assignment circuit, 700 a device ID determining sequence start control unit, 701 a time measurement part, 702 a device ID storage unit, 703 a token judging circuit, 704 a downstream side token production circuit, 705 a header device judging circuit, 706 a header token production circuit, 720 a time-slot position indicating unit, 721 a used time-slot indicating unit, 722 an allocated time-slot judging unit, 724 a data retaining unit, 725 a data storage unit, 726 a time-slot allocating (SA) token production circuit, 727 a source token production part, 7260 a token propagation circuit, and 7272 a head token production circuit.

### DESCRIPTION OF THE EMBODIMENT

In the following, an embodiment of the present invention will be explained in detail with reference to figures.

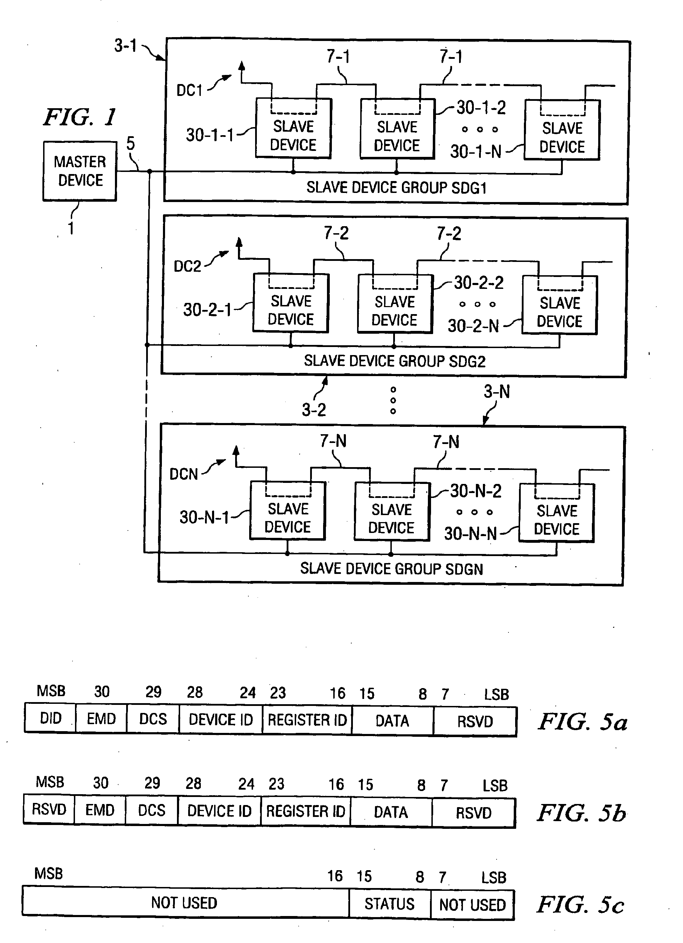

First, FIG. 1 shows a communication system A with the present invention incorporated in its basic configuration. As shown in the figure, said system A comprises one master device 1, multiple slave device groups 3-1∼3-N (SDG1-N), and buses 5 that connect each of the slave device groups to master device 1. Each slave device group has at least one or, as shown in the figure, multiple slave devices, that is, slave devices 30-1-1∼30-1-N or 30-2-1∼30-2-N. Each of the slave devices is connected to bus 5. Also, communication system A has at least one daisy chain, such as DC1∼DCN. Each daisy chain corresponds to one slave device group. One daisy chain is related to the slave devices in the corresponding group. For example, in slave device group 3-1, daisy chain DC1 is formed by connecting multiple slave devices in the form of a daisy chain using daisy chain connection line 7-1. Daisy chain connection lines 7-2∼7-N are used for other slave device groups.

In the communication system A shown in FIG. 1, commands or other control signals and data are transmitted via bus 5 between master device 1 and each slave device 30 in slave device groups SDG1∼N. The bus is a serial bus. However, it is also possible to use parallel buses. The identifiers of the devices used for the transmission are automatically assigned by each of daisy chains DC1∼DCN arranged in slave device groups 3-1∼3-N. In other words, the device identifier (device ID) of each of slave devices 30-1-1∼30-1-N in slave device group SDG1 is assigned by daisy chain DC1 by transmitting device ID assigning token or resource allocation token (to be described later) between the slave devices. If the device IDs assigned by daisy chain DC1 to slave devices 30-1-1∼30-1-N are preset during design of the system, these device IDs can be pre-stored in the memory of master device 1. If the device identifiers cannot be determined when designing the system, the device IDs to be assigned to the slave devices can also be kept in the master device and assigned by means of communication between the master device and the slave devices. In the configuration shown in FIG. 1, since there are multiple slave device groups, in order to distinguish the slave devices between the device groups, it is necessary to use slave device group identifiers and daisy chain identifiers. The slave device group identifiers are stored in the ROM or RAM for slave devices set in each slave device group or can be set from an external setting terminal (H is "1," L is "2").

As described above, the device ID (including the case of using slave device group identifier) assigned to each of the slave devices can be used as the number of a slave device in communication system A, that is, the number in system or as a sequential number in a prescribed sequence, such as the allocation sequence of a sharable resource, in the system.

For example, As will be explained below, the present system A can be operated using VTDMCA (variable time division multiplex command and audio data). For example, for the variable time division multiplex command and audio data, there are multiple consecutive time slots in each communication time frame. When these time slots are allocated to each of multiple channels, the system can be operated using a certain communication format to conduct communication.

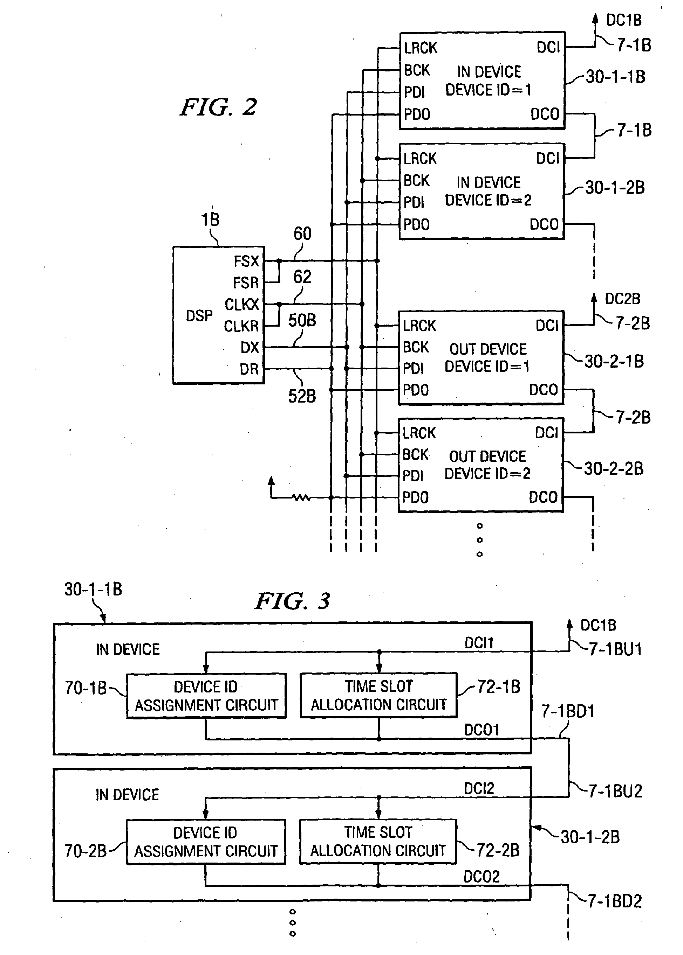

In the following, an audio multi-chip system B as another embodiment of the communication system A of the present invention shown in FIG. 1 will be explained with reference to FIG. 2. Said system B has a digital signal processor DSP 1B as master device as well as N slave devices 30-1-1B, 30-1-2B ... 30-1-NB (only two shown in the figure) as input (IN) device groups and N slave devices 30-2-1B, 30-2-2B ... 30-2-NB (only two shown in the figure) as output (OUT) device groups. Consequently, system B has two slave device groups. In this case, the IN devices (devices receiving input from DSP) include digital/analog converter (DAC) and other devices, while OUT devices (devices that output to DSP) include analog/digital converter (ADC) and other devices. As will be described below, the system may also include CODECs or other IN/OUT devices and PLLs and other NO devices with no input/output used for signal processing. System B has conductors 50B and 52B as the buses for connecting DSP 1B and IN devices 30-1-1B∼NB as well as OUT devices 30-2-1B∼NB. In other words, one connection line is used for the transmission from the master device to the multiple slave devices, while another connection line is used for the transmission from the multiple slave devices to the master device. Also, conductor 60 is used to supply frame synchronizing clock signal, while conductor 62 is used to supply port synchronizing clock signal. System B also has daisy chains for the two slave device groups, that is, daisy chain DC1B for devices 30-1-1B∼NB in the IN device group and daisy chain DC2B for devices 30-2-1B∼NB in the OUT device group. As will be described below, for device ID (device ID), a "1" is assigned to IN device 30-1-1B, while a "2" is assigned to IN device 30-1-2B. Similarly, for device ID, a "1" is assigned to OUT device 30-2-1B, while a "2" is assigned to OUT device 30-2-2B. In order to distinguish between these two device groups, a slave device group identifier is assigned by pre-burning the identifier in the ROM of the devices that belong to each group. For example, a "1" is assigned to the IN device group, while a "2" is assigned to the OUT device group.

More specifically, any general digital signal processor can be used as DSP 1B. It comprises a port to supply the frame synchronizing clock signal for determining the communication frame (FSX) used for transmitting and the communication frame (FSR) used for receiving, a port to supply the port synchronizing clock signal (CLKX) for transmitting and the port synchronizing clock signal (CLKR) for receiving, as well as the serial ports of the DSP, that is, the data transmitting port DX for transmitting commands and data and the data receiving port DR for receiving the commands and data. On the other hand, each of the IN devices and OUT devices has an LRCK port for receiving the frame synchronizing clock via conductor 60, a BCK port for receiving the port synchronizing clock signal via conductor 62, an input port PDI for receiving commands and data from DSP 1B via conductor 50B, and an output port PDO for outputting status or data to DSP 1B via conductor 52B. In order to assign device ID to each device, each of these ports has an input port DCI and an output port DCO for daisy chain. These ports are connected to either daisy chain connection line 7-1B or 7-2B that constitutes the daisy chain. If the IN device is a DAC, the analog output terminal will not be shown in the figure. Also, if the OUT device is an ADC, its analog input terminal will not be shown in the figure. Only the line transmitting the digital signals is displayed.

In the following, the circuit using a daisy chain to assign device ID (or device number) will be explained in detail with reference to FIG. 3. FIG. 3 only shows two devices, that is, IN device 30-1-1B and 30-1-2B in system B shown in FIG. 2. Other IN devices and OUT devices are the same. IN device 30-1-1B has a device ID assignment circuit 70-1B for assigning device ID to the device and a time-slot allocating circuit 72-1B for allocating a sequential number for use of the bus as a sharable resource (in the present example, a time slot with a specific sequential number among many consecutive time slots in the communication frame) to the device as circuits that constitute part of daisy chain DC1B. The inputs of these circuits are connected to connection line 7-1BU1 on the upstream side of the daisy chain via DCI port, while their outputs are connected to connection line 7-1BD1 on the downstream side via DCO port. Also, connection line 7-1BU1 on the upstream side is connected to a reference voltage, while connection line 7-1BD1 on the downstream side is connected to the upstream connection line 7-1BU2 of the next IN device 30-1-2B. Similarly, IN device 30-1-2B also has ID assignment circuit 70-2B and time-slot allocating circuit 72-2B. Its downstream connection line 7-1BD2 is connected to the upstream connection line of the next IN device. The details of these circuits will be explained below.

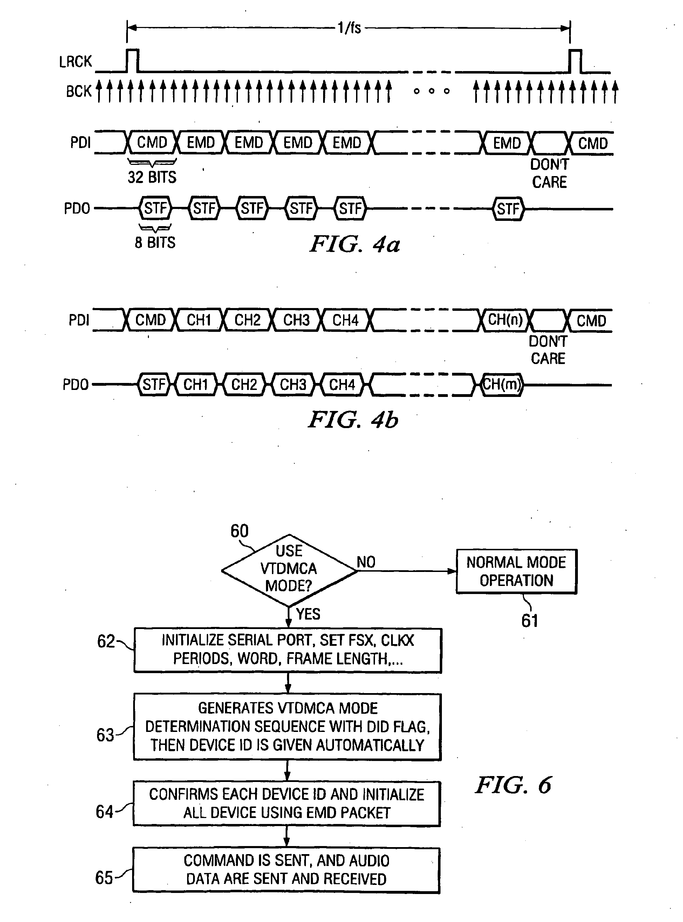

In the following, the overall operation of audio multi-chip system B shown in FIG. 2 will be explained with reference to FIG. 4. FIG. 4 shows the format of VTDMCA used in the present system. The frame synchronizing clock signal LRCK has a period of 1/fs, or the reciprocal of frequency fs, which is the same as the sampling frequency of the audio signal. The duty ratio of this clock signal is much smaller than 50% compared with the one with a duty ratio of 50% for the audio serial interface used in conventional audio products. For example, it has interval "H" comprising two periods of clock signal BCK in order to guarantee compatibility with the conventional system by making it possible to distinguish the VTDMCA communication interface of the present invention from the conventional communication interface on the basis of the difference in the duty ratio. The many consecutive time slots in one period of the frame synchronizing clock are determined by the frequency of the port synchronizing clock signal BCK. In this way, correspondence with multi-channels becomes possible, and time-division multiplex communication can be realized. FIG. 4 also shows the input format of the data and commands input/output to the input port PDI of the IN device and OUT device as well as the output format of the data and commands output from the output port PDO during initialization and operation in the communication frame having many consecutive time slots. During initialization, as shown in the figure, the format of input PDI has a command field (CMD) as the header followed by many expanded command fields (EMD). Each field has 32 bits and a length that fits in the period of one time slot. The format of the output PDO from the IN device has consecutive 8-bit status field (STF). Each status field includes status data stored in a register. During operation, the format of input PDI has a 32-bit command field (CMD) as the header followed by audio channel fields (Ch1-Ch(n)) corresponding to n channels ch1-chn. The format of output PDO has an 8-bit status field (STF) as the header followed by audio channel fields Ch1-Ch(m) corresponding to m channels. Since the numbers of the input channels may differ from the number of output channels, the number of channels m and n may differ. In other words, during operation, since the IN device only receives the input data, only the PDI format is used. On the other hand, since the OUT device only sends out the output data, only the PDO format is used. As described above, in the VTDMCA communication of the present invention, a serial bus is used with a time-division multiplex format.

In the following, the aforementioned command field, expanded command filed, and audio channel field will be explained with reference to FIG. 5. FIG. 5(a) shows the format of the command field. The DID field at the header of the command indicates whether a device ID determining sequence is executed. A "1" bit means that the determining sequence is executed. A "0" bit means that the next command will be executed. The EMD field indicates the presence/absence of the expanded field shown in FIG. 4. If this bit is "1," the next field is an expanded command field. If it is "0," the next field is an audio channel field. The daisy chain selecting (DCS) field is used to indicate the slave device group. In the example shown in FIG. 2, 0 is assigned to the IN device, while 1 is assigned to the OUT device. The "device ID" field is the device number assigned by the device ID determining sequence. It is used to identify the device. If the "device ID" field is "0x00," it means that none of the devices is selected. If it is "0x1F," it means that all of the devices are selected. This field can be set as the same at one time (such as enable of DAC, on/on of mute, etc.). The "register ID" field is the number assigned to each intrinsic register of the IN device or OUT device. This number is used to identify the register. This field includes a R/W flag, which is used to indicate writing to or reading from the internal register. The "data" field includes the data for the designated internal register of a designated device selected depending on the device ID and register ID.

FIG. 5(b) shows an expanded command field. This field has the same format as the command field shown in FIG. 5(a) except that the MSB bit is not used (rvd). Also, no expanded command field can be selected after this field.

FIG. 5(c) shows a status field (STF). It only uses 8 bits, that is, bits 8-15 of 32 bits (8 bits in FIG. 4). The status field is used to read the status of a slave device stored in a register of the slave device in response to the request of a command field or an expanded command field and then send the status to DSP 1B.

Finally, the audio channel field, although not shown in the figure, is used to transmit audio data. Each audio channel field is handled as the audio data of the device selected by the command field that is previous to this field. The audio format can be selected as desired for each device.

As can be seen from the format that has been explained above, registers used for selecting audio channels occupied by each device, although not shown in the figure, are set in the IN device and OUT device used as the slave devices shown in FIGS. 2 and 3. Also, for the purpose of confirmation, it is preferred to use registers for storing the device ID of each device. Also, as described above, the internal register of each device cannot only be used to store the control data but also to read the control data. In the system shown in FIG. 2, PDO port is used as the read port. However, the connections to the PDO ports of all devices can be wired-OR connections by setting the PDO to Hiz output (high impedance, that is, open). Since the read/write timing for the registers is known to the expert in the field, the explanation of its details is omitted.

In the following, the overall operation of the audio multi-chip system B shown in FIG. 2 will be explained with the aid of the flow chart shown in FIG. 6. Also, this flow chart shows the control from the host controller (DSP in this example). First, in step 60, it is determined whether the VGTDMCA communication mode is used. This judgment is usually made at the system design stage. If it is found that no VTDMCA mode is used, the conventional operating mode will be used in step 61. Audio Serial Interface and Host Serial Interface are used in the conventional mode. On the other hand, if it is found that VTDMCA mode is used, the host controller will execute initialization for using the VTDMCA mode in step 62. In other words, the serial port of DSP 1B is initialized to set the length of interval "H" of the frame synchronizing clock LRCK, the number of BCK clocks, the data length, and the frame length, etc. A VTDMCA mode determining sequence is then generated in step 63. Also, when the PDI input (the DID field in FIG. 5(a) is "1") for initialization shown in FIG. 4 is generated, the device ID determining sequence is started. In this way, the device IDs are assigned automatically to IN devices and OUT devices. Next, in step 64, if necessary, the device IDs of all of the IN devices and OUT devices are confirmed. The confirmation is executed by DSP 1B, which reads the device ID stored in the internal register of each device. In other words, DSP 1B uses the PDI input to send a command on reading the internal register that stores the device ID to each slave device. In response to this command, each slave device uses the PDO output to send the read device ID to DSP 1B. DSP 1B compares the received device ID of each slave device with the device ID of the slave device that is pre-stored in the memory of the DSP itself. Also, in step 64, all of the slave devices are initialized by using the expanded command field (shown in FIG. 5(b)) of the PDI data. After initialization is completed, in step 65, DSP 1B sends the PDI input to IN device or receives the PDO output from OUT device. For example, during operation, for the PDI input to an IN device, DSP 1B first sends a command field of writing or reading to a certain IN device (can be selected as desired), followed by sending the audio channel field. The audio channel field has been allocated by the initialization performed for all of the devices. If the command field is for reading, the contents of the register designated by the command field is output from the PDO port to a status field. The command field for OUT device is also the same. Only the audio channel field is changed to sending of audio data.

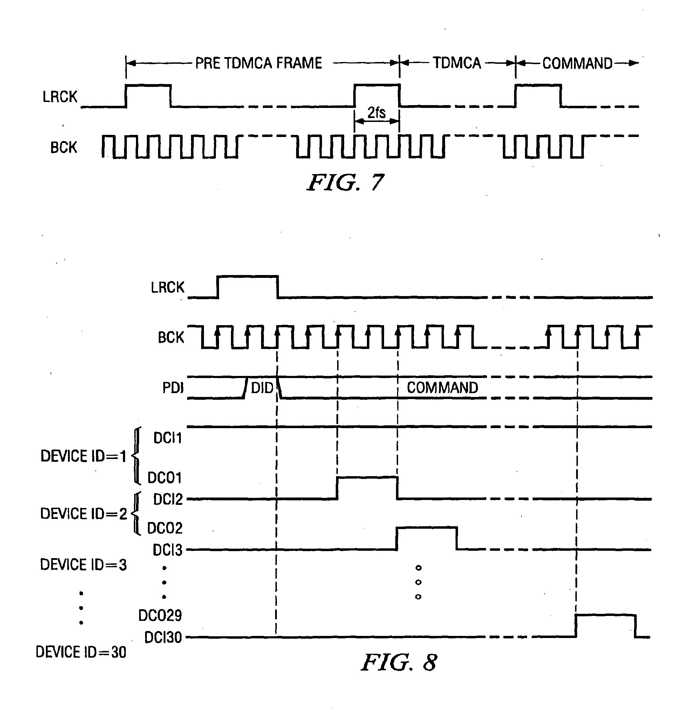

In the following, the operation of said system B will be explained in detail with reference to FIGS. 7-21.

FIG. 7 shows a timing diagram for clock signals LRCK and BCK for DSP (1B) to determine the VTDMCA mode in step 62 in FIG. 6. As shown in the figure, the H ("1") interval of LRCK is equal to two periods of BCK clock. To prevent faulty operation, VTDMCA mode is confirmed on the side of the IN device and OUT device by a double detection method (in FIG. 7, the first cycle is shown as (pre) VTDMCA frame, and the second cycle is shown as VTDMCA frame). Also, as described above, the reason that the H ("1") interval of LRCK is equal to two periods of BCK clock is to distinguish from the LRCK 50% duty cycle of Audio Serial Interface in the conventional operating mode.

Next, the timing diagram of the device ID assigning sequence will be explained with reference to FIG. 8. This sequence is executed in step 63 in FIG. 6. The device ID determining sequence is carried out independently for the IN device group and the OUT device group. It is carried out by passing a device ID assigning token (DID token) from the most upstream portion of a daisy chain to the downstream portion. Only IN device will be explained below. However, the operation is the same for the OUT device group. More specifically, the DID token is formed by the reference voltage connected to the most upstream portion of the daisy chain. First, the PDI data input to the PDI port in FIG. 8 includes a command field with the DID field set to "1" in order to start the device ID assigning sequence. The IN device receiving this command is the most upstream IN device in the daisy chain. Since a constantly high DID token is received at the DCI1 port, the device ID = 1 is obtained when the clock signal LRCK becomes high. Then, the DID token is passed to the IN device at the downstream portion. The downstream IN device determines its own device ID on the basis of the number of the BCK clock pulses counted until said DID token is received (the identifier is 1 if two clock pulses are counted). As shown in FIG. 8, the IN device that is directly next to the most upstream IN device (called header device) counts the BCK clock pulses until the DCI2 connected to DCO1 becomes high. Therefore a count of 4 means device ID = 2. For the next IN device, a count of 6 means device ID = 3. In other words, two or more digits of the internal counter are used to determine the device ID. As described above, when the DID token is passed from the most upstream to downstream in the daisy chain, the device IDs of the IN devices can be determined. In summary, depending on the DID field in the command field, all of the slave devices are able to recognize the device ID determining sequence and pass the DID token sequentially from the header slave device synchronously with BCK. Each slave device is able to recognize which number it is connected to during the cycle when "high" occurs at the DCI port. The slave device also outputs the DID token to the next device. By fixing the DCI port of the header device to "1," device ID = 1 can be recognized as the starting point.

By using the device ID determination method of the present invention, even if there are multiple devices of the same type in the same system, the master device, such as a DSP, is able to identify each of them. Compared with the method that simply uses the external terminals of the master device to identify devices, the method of the present invention has the advantage that the number of devices that can be identified is not limited by the number of master device terminals that can be used. In other words, the present invention eliminates the limitation of the conventional method by using a daisy chain. The number of the slave devices can be increased without increasing the number of available terminals of the master device.

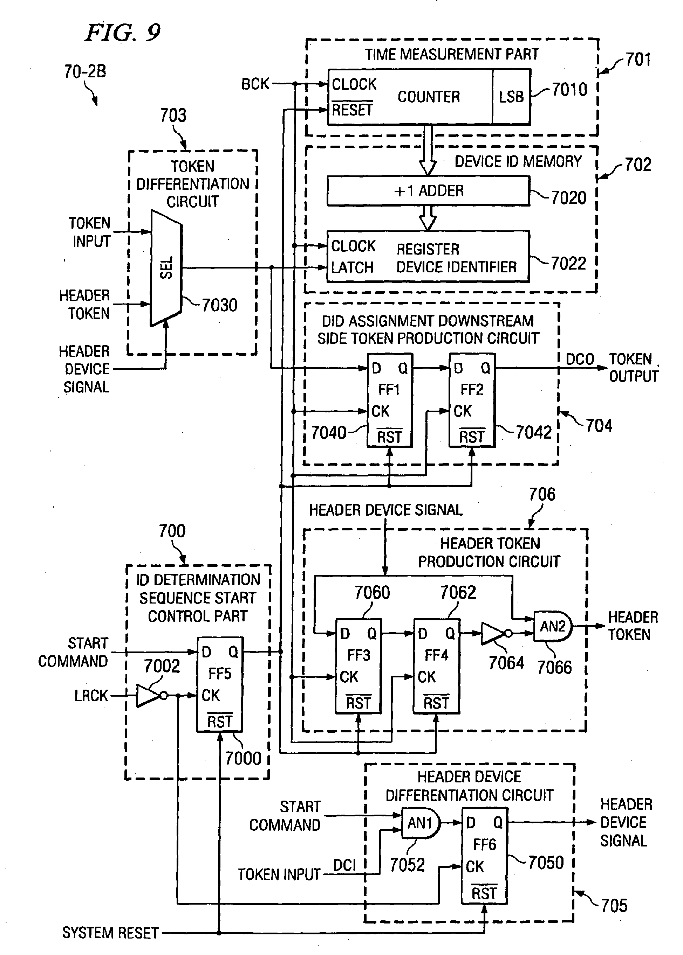

In the following, a detailed example of the device ID assignment circuit 70 shown in FIG. 3 for executing the device ID assigning sequence will be explained with reference to FIG. 9. Since other device ID assignment circuits are the same, only circuit 70-2B will be explained in detail. As shown in the figure, device ID assignment circuit 70-2B receives clock signals LRCK and BCK, the device identifier (DID) assigning token from the DCI port, a command for starting the device ID determining sequence, and a system reset signal as the inputs. The circuit generates a DID assigning token output to the DCO port as the output. The starting command is the signal "1" in the DID field in the command field explained in FIG. 8. The system reset signal goes high when the system reset is cancelled. As shown in the figure, the circuit with the aforementioned inputs and output is approximately comprised of device ID determining sequence start control unit 700, time measurement part 701, device ID memory unit 702, token judging circuit 703, downstream DID assigning token production circuit 704, header device (the most upstream device) judging circuit 705, and header token production circuit 706. More specifically, sequence start control unit 700 has a D-type flip-flop (F/F5) 7000, which has D input, CK input, reset (RST) input, and Q output. The CK terminal receives clock signal LRCK via inverter 7002. When the reset signal is high and the start command is high, F/F5 generates a high Q output in response to clock signal LRCK. The high Q output outputs a signal that indicates the period (equal to the period of 1 frame) from the beginning to the end of the determination sequence.

On the other hand, time measurement part 701 is formed by counter 7010. Said counter 7010 has a CLOCK terminal for receiving clock signal BCK and a RESET terminal connected to the output of F/F5. The counter is reset with the falling edge of the Q output of F/F2 received at the RESET terminal and starts to count clock signal BCK received after the device ID determining sequence is started. The counter starts to measure the time after the beginning of the determination sequence and outputs the count value as the time measurement result. Device ID memory unit 702 comprises a +1 adder 7020 and a register 7022. The +1 adder 7020 has its input connected to receive the output of the counter except for the LSB of counter 7010. It adds 1 to the output of the counter and outputs the result. In this way, two periods of clock signal BCK are counted as 1 for the device identifier. Register 7022 has a LATCH terminal for receiving token input and an input connected to the output of +1 adder 7020 in addition to the CLOCK terminal that receives clock BCK. When said register 7022 receives a high token input, it latches the output of the adder as the time measurement result from the beginning of the determining sequence to the time when the token is received in response to clock signal BCK. The output of the adder is stored as the device ID of the corresponding device. The downstream DID assigning token production part 704 included in device ID assignment circuit 70-2B comprises a D-type flip-flop (F/F1) 7040 and a D-type flip-flop (F/F2) 7042. These F/Fs have an RST input for receiving the Q output of F/F5 7000 and a CK terminal for receiving clock signal BCK. Their D inputs are connected in such a way that F/F1 receives a token from token judging circuit 703, and F/F2 receives the Q output of F/F1. With the aforementioned configuration, F/F1 and F/F2 operate as follows. When these flip-flops receive a token via token judging circuit 703 after they are reset (reset with the falling edge) at the beginning of the determining sequence, the received token is delayed by two periods of clock signal BCK (two-stage F/F), and the delayed token occurs at the Q output of F/F2 as the DID assigning token on the downstream side. The operation described above is the general operation of the devices, including the header device. In the case of the header device, however, since the DID assigning token input is constantly high, it is necessary to generate a special header token. Therefore, as described above, device ID assignment circuit 70-2B also has circuits 703, 705, and 706.

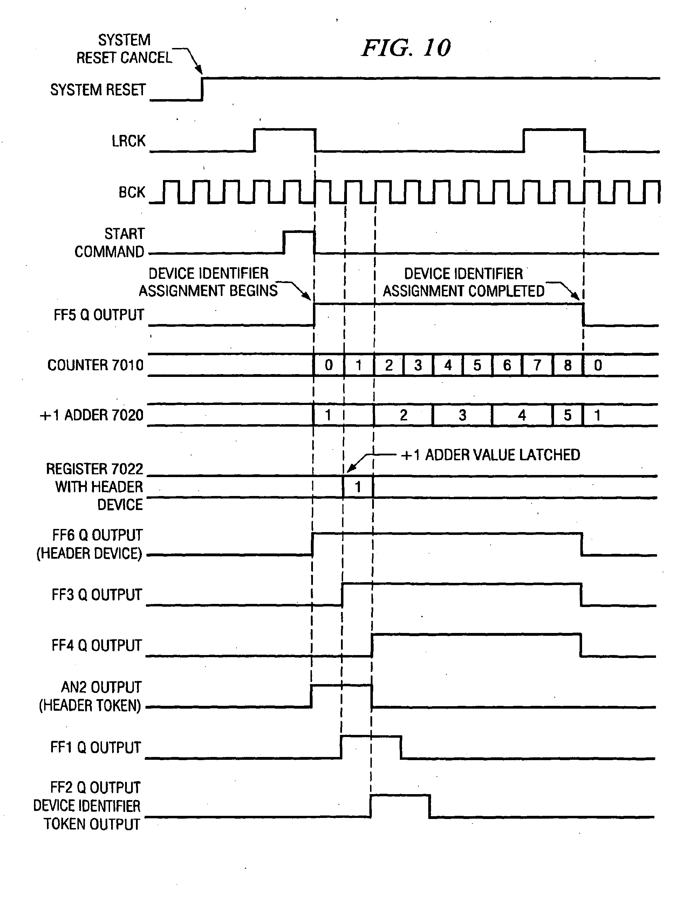

More specifically, token judging circuit 703 has a selector 7030. It has an input for receiving the DID assigning token (it is a constantly high signal for the header device) and an input for receiving the header token (to be described below). It also has a control input for receiving a header device signal for indicating that a device is the header device (when it is high). When the header device signal is high, the selector sends the header token to the output. If it is low, it sends the DID assigning token coming from the upstream portion to the output. Header device judging circuit 705 has a flip-flop (F/F6) 7050 and an AND gate 7052. F/F6 has a reset input for receiving the system reset signal, a CK terminal for receiving clock signal LRCK via inverter 7002, and a D terminal connected to the output of AND gate 7052. The AND gate has an input for receiving the start command and an input for receiving the DID token assigning input. In the case of the header device, since DCI is constantly high, AND gate (AN1) 7052 sends out a high output when the start command goes high. The F/F6 receiving this output generates a high Q output in response to the falling edge of clock LRCK. The output becomes low at the next falling edge of clock LRCK (see FIG. 10). On the other hand, for the downstream devices other than the header device, since the start command and the DCI input cannot be high simultaneously, the Q output of F/F6 is constantly low. In this way, the high Q output of the F/F6 indicates that the device is the header device.

Header token production circuit 706 is used to generate a token specially used for the header device since the DCI is constantly high in the header device. More specifically, circuit 706 has F/F3 7060 and F/F4 7062, inverter 7064, and AND gate (AN2) 7066. F/F3 and F/F4 have a reset terminal for receiving the Q output of F/F5 and a CK terminal for receiving clock BCK. F/F3 has a D terminal for receiving the header device signal (Q output of F/F6), while F/F4 has a D terminal connected to the Q output of F/F3. With this connection, F/F3 and F/F4 delay the front edge of the header device signal by two clock pulses for every clock pulse (see FIG. 10). When receiving the signal obtained by inverting the delayed signal with inverter 7064 and the header device signal, AND gate AN2 generates a signal that is high for over two periods of clock signal BCK at the output since the beginning of the communication frame (falling edge of clock signal LRCK). The output constitutes the header token used for the header device (see FIG. 10). As described above, the header token is supplied to token judging circuit 703. For downstream devices other than the header device, the header device signal is constantly low, and thus the output of AND gate AN2 is constantly low.

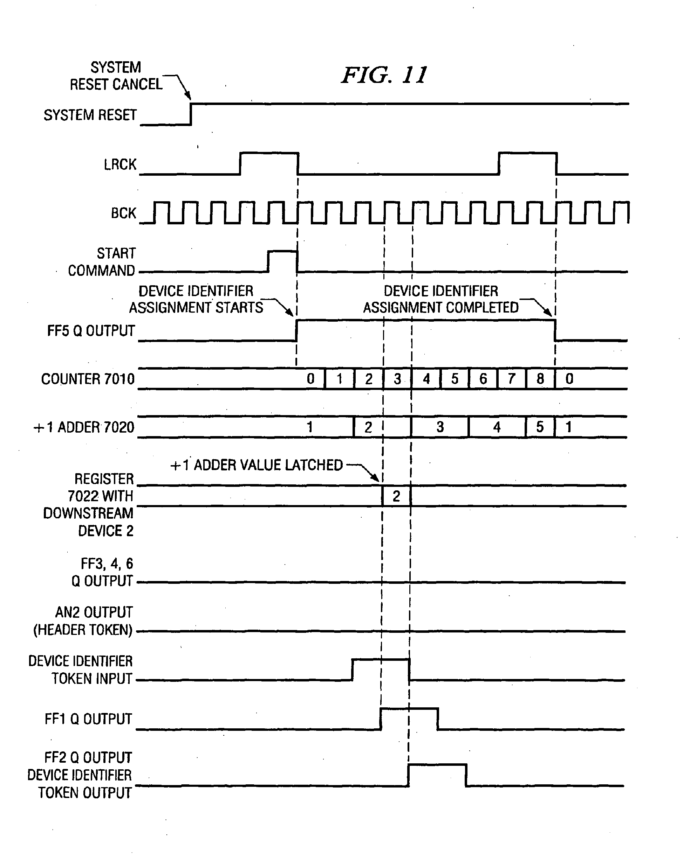

In the following, the operation of said device ID assignment circuit 70 will be explained with reference to FIGS. 10 and 11. First, the header device will be explained with reference to the timing diagram shown in FIG. 10. After the system reset signal goes high, clock signal LRCK goes high, and the VTDMCA frame is started. When the start command goes high to indicate the beginning of a device ID determining sequence, the Q output of F/F5 goes high to indicate the device ID determination sequence. As a result, counter 7010 starts to count clock pulses BCK as shown in the figure, and up-counting of the device identifier is started by addition of adder 7020. On the other hand, F/F6 outputs a header device signal indicating that the device is the header device. As a result, a header token that is high for over two clock pulses as shown in the figure is generated via F/F3, 4, etc. Since the header device signal is high, the header token is passed by selector 7030 to its output and supplied to register 7022 and F/F1. In response to the header token, register 7022 latches the output "1" of the adder at that time and stores it. Said "1" indicates that the device identifier of the device = 1. When receiving the header token, F/F1 operates together with F/F2 to delay the header token by two clock pulses to generate a downstream side token, which appears at the Q output of F/F2. As a result of the aforementioned operation, device identifier = 1 is assigned to the header device.

In the following, the device directly next to the header device on the downstream side will be explained with reference to Figure 11. In the case of the downstream device, as described above, since the Q outputs of F/F6 and F/F3, 4, 5 are all low, the header device signal (the Q output of F/F6) and the header token (output of AN) are low. On the other hand, when a downstream token from the header device is received as a DID assigning token via DCI, since the header device signal is low, the selector 7030 will pass the DID assigning token to its output and supply it to register 7022 and F/F1. Register 7022 latches the output of the adder at that time and stores device identifier = 2. In the meantime, F/F1 and F/F2 delay the token by two clock pulses to generate the DID assigning token for the next downstream device.

By performing the aforementioned operation, each device in the IN device group can determine its own device ID, that is, receive the assigned device ID. When the Q output of F/F5 goes "low," the determination sequence is terminated. It is only necessary to carry out the determining sequence once during initialization of the system. Consequently, the start command is only generated once during the initialization. During the operation after the initialization, the determined device ID is stored as is in the register.

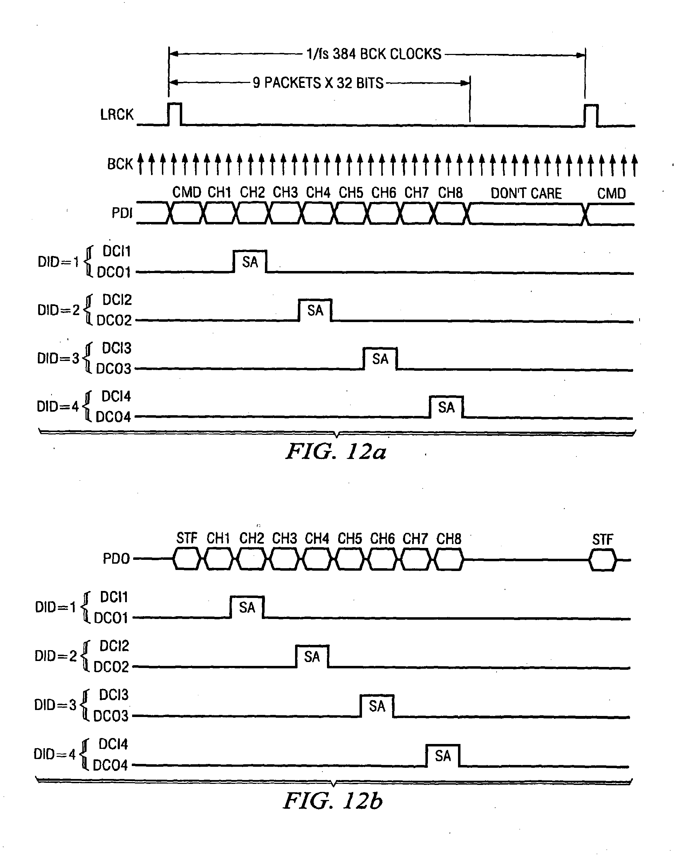

In the following, the overall operation of the time-slot allocating circuit 72 shown in FIG. 3 will be explained with reference to FIG. 12. This circuit is used to allocate the time slots in a communication frame to each slave device, such as IN device or OUT device, during VTDMCA communication. Also, like the case of device ID assignment circuit 70, the aforementioned circuit allocates the time slots using the same method independently for the IN device group and the OUT device group. Therefore, only the IN device group shown in FIG. 12 will be explained. As shown in the figure, one communication frame is the period from one rising edge of clock signal LRCK to the next rising edge. The first time slot starts from the rising edge of clock LRCK and is followed by many consecutive time slots. In the example shown in FIG. 12, the command field of PDI input exists in the first time slot, and one of audio channel fields ch1-ch8 exists in each time slot since the second time slot. The period after ch8 is not used in the example shown in the figure. In the example shown in FIG. 12, when each IN device uses 2 channels, the most upstream device (DID=1) uses ch1 and ch2, the next device (DID=2) uses channel uses ch3 and ch4, the further next device (DID=3) uses ch5 and ch6, and the final device (DID=4) uses ch7 and ch8.

After the communication frame starts, the header (most upstream) device with a device ID (DID=1) of number one enables two audio channels, and since the DCI1 port is constantly high, it picks up two channels from the first audio channel field that follows the command field in the PDI input received at the PDI port from DSP (1B). At that time, DCO1 port is at the high level during the period of the time slot of the audio channel field of ch2. As a result, a time-slot allocating token (referred to as time-slot allocating (SA) token hereinafter) is generated and is sent to the next downstream device, that is, the second IN device (DID=2). Since the second IN device also picks up two channel fields, it picks up ch3 and ch4. Similarly, at that time, DCO2 port goes high during the period of the time slot of the audio channel field of ch4 to generate an SA token and pass it to the next downstream device, that is, the third IN device (DID=3). After that, similarly, the final IN device (DID=4) receives the SA token and picks up the audio channel fields of the number of the channels used by itself (two) from the audio channel field that immediately follows. Then, an SA token is generated during the period of the time slot of the final audio channel field (ch8), and the SA token is passed to the next downstream IN device. In this way, time-division multiplex communication is realized. Also, in this example, there is no need for the final IN device (DID=4) to recognize itself as the final device, and it outputs an SA token downstream. Also, variable time-division multiplex communication can be realized by allocating a different number of time slots to each device. The timing for the aforementioned IN device group is the same for the OUT device group.

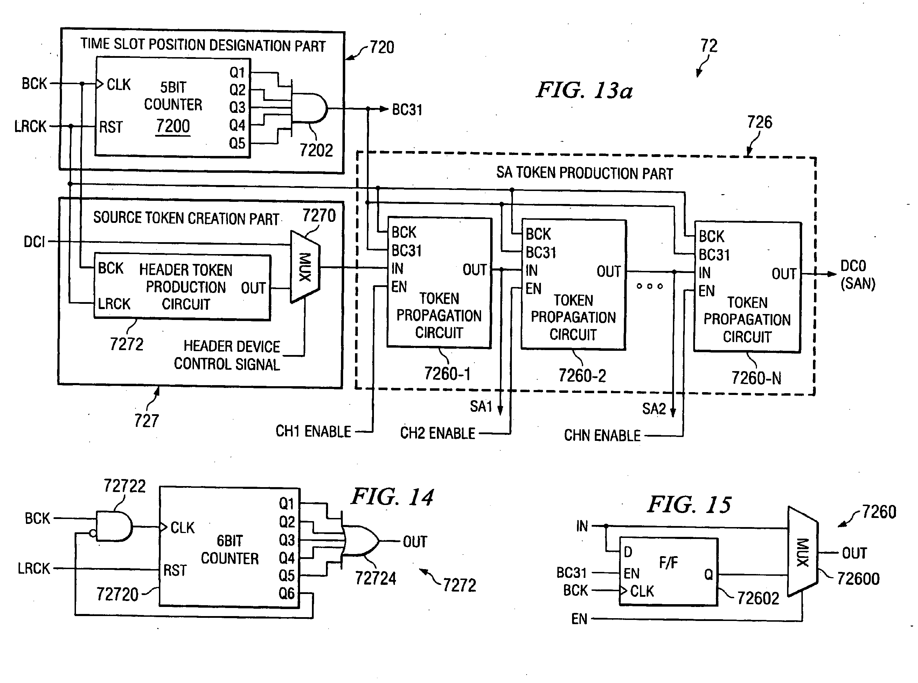

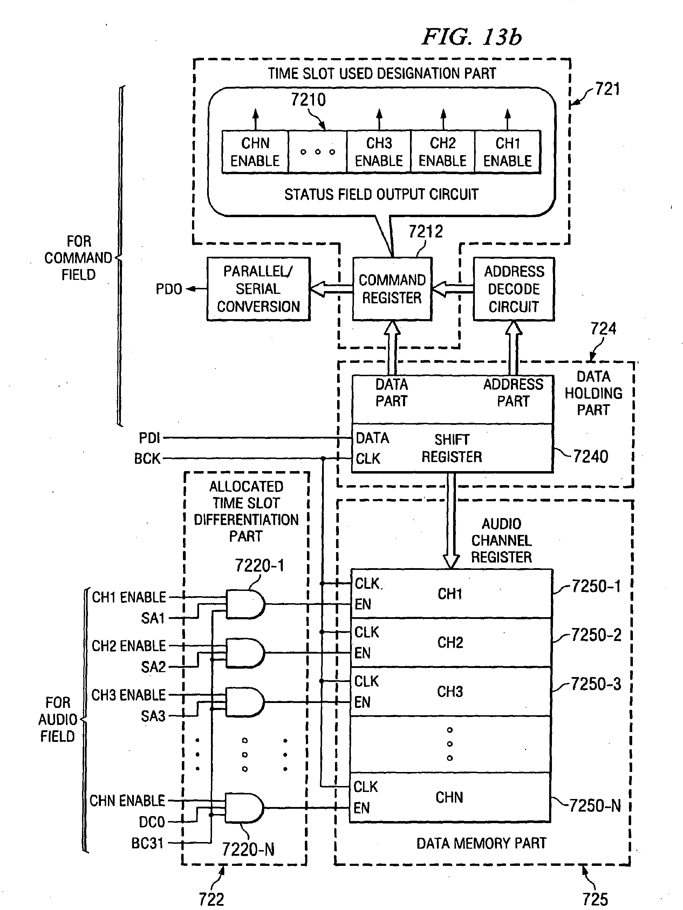

In the following, the details of the time slot allocating circuit 72 shown in FIG. 3 will be explained with reference to FIGS. 13-15. As shown in FIGS. 13(a) and (b), time-slot allocating circuit 72 approximately comprises time-slot position indicating unit 720, used time-slot indicating unit 721 (FIG. 13(b)), allocated time-slot judging unit 722 (FIG. 13(b)), data retaining unit 724, data storage unit 725, SA (slot allocation) token production part 726, and source token production part 727. Said time-slot position indicating unit 720 comprises a counter (7200) and an AND gate 7202. Counter 7200 has RST terminal for receiving clock signal LRCK, CK terminal for receiving clock signal BCK, and a 5-bit counter output Q1∼Q5. It is reset by the falling edge of clock signal LRCK. When counting of the number of BCK clock pulses generated during one time slot (32 BCK clock pulses) is completed, the 5-bit counter outputs Q1∼Q5 all go high (since counting starts from the second BCK clock pulses all of the bits go high at the count of "31"). The AND gate 7202 having its input connected to each bit of the counter output generates a high output only when all of the bits in the counter output are "1". The high AND gate output becomes a signal bc31 indicating that each time slot is ended.

Used time slot indicating unit 721 is used to indicate the number of the time slots used by a certain IN device. It is constituted with an N-bit register 7210. N is the total number of channels set in the device. Said register 7210 has channel enable bits from ch1 to chN. When a bit is "1," the corresponding channel is enabled, that is, the IN device is set to use that channel (or time slot). Consequently, the channel enable bits of "1" constitute the enable signal for use of time slot. Since there are N bits, up to N channels can be assigned to the IN device. In this way, variable time-division multiplex communication can be realized. In this case, the ch1 enable signal is not the ch1 slot shown in FIG. 12. It simply means that the first slot is set to be used by the device. Said register 7210 is included in command register 7212, that is, the internal register of the IN device. Each bit of register 7210 can be preset in the IN device. It is preferred to prestore these bits in the memory of DSP 1B used as the master device during the system design. However, if the allocation of the time slots to the slave devices is not made available during system design, or if it is made variable, the master device can write the time slot allocation for the slave devices made after system design in the master device into the register 7210 of the command register 7212 of each slave device (using the command field) by means of communication. This can be achieved via shift register 7240 and an address decoding circuit (FIG. 13(b)). The set contents of the register in each slave device can also be received by the master device by means of communication. This can be realized by reading register 7210 of the slave device via the status field output circuit (parallel/series conversion circuit) shown in FIG. (13(b)). Allocated time slot judging unit 722 is comprised of N AND gates 7220-1∼N corresponding to channels 1∼N. Each AND gate 7220 receives one corresponding channel enable signal among ch1-chN at one input. Another input receives the SA (time-slot allocation) token input SA1∼SAN (or DCO) of the same corresponding channel. The third input is connected to receive time-slot starting position indicating signal bc31. Each of SA tokens SA1∼SAN is used to allocate the time slot corresponding to each of audio channel fields 1∼N so that the device can use the time slot. Consequently, the output of each AND gate 7220 is concerned with a certain specific time slot. The use of the time slot (or channel) is enabled, and an SA token is received. Also, a high output will be generated only when a time slot position indicating signal is received. The high output becomes an allocated slot use indication signal, indicating that the time slot when the output is high is the slot allocated to the device (that is, the allocated slot) and is the slot used by the device (that is, the used slot). When the channel enable signal is low, since the time slot is not used by the device, the allocated slot use indication signal is low.

As shown in the figure, data retaining unit 724 is constituted by a shift register 7240. The shift register has a DATA terminal for receiving the packet data, that is, the PDI input from the PDI port and a CK terminal for receiving clock signal BCK. It also has an output terminal for generating the data retained in the shift register. Said shift register 7240 can retain data with a length of one packet (or one time slot) for the incoming PDI input.

Data storage unit 725 comprises N audio channel registers 7250-1∼N in the same number as N channels. Each of the registers has an enable EN terminal for receiving the allocated slot use indicating signal from the corresponding AND gate 7222 and a CK terminal for receiving BCK terminal. It also has an input (schematically shown in the figure) connected to the output of shift register 7240. Each register 7250 receives, latches, and stores the packet in the allocated slot (or the allocated channel) from shift register 7240 in response to the allocated slot use indicating signal sent from AND gate 7222. In this way, the IN device can receive data from the allocated and used time slot. The data in register 7250 will be read out for a later processing (in the case of DAC, digital/analog conversion).

Source token production part 727 is a circuit for generating the source token. It generates a header token or outputs an SA token from the upstream portion. Source token production part 727 has a multiplexer (MUX) 7270 and a header token production circuit 7272. One of the inputs of MUX 72720 is connected to the daisy chain input DCI, while the other input is connected to the output of header token production circuit 7272. It also has a control input for receiving the header device signal from a circuit that is the same as header device judging circuit 705 shown in FIG. 9 (one circuit can be shared). Consequently, when the header device signal becomes high, that is, when the device concerned is identified as the header device, the header token from circuit 7272 is passed to the output. If header device signal is low, that is, if the given device is identified as a device other than the header device, the SA token received at the DCI port from the upstream is passed to the output. Header token production circuit 7272 has a BCK terminal for receiving clock signal BCK, an LRCK terminal for receiving clock signal LRCK, and an output for generating the header token.

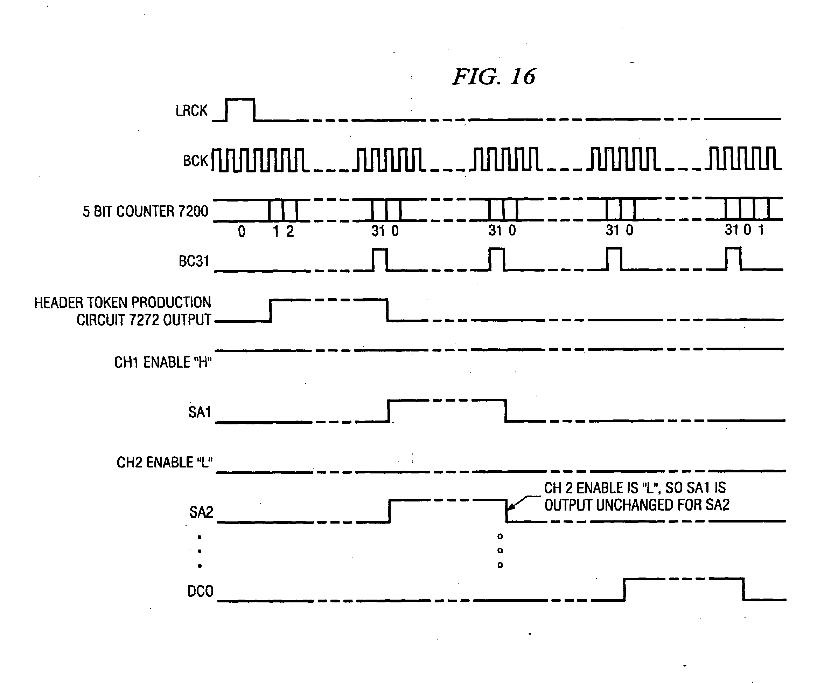

More specifically, as shown in FIG. 14, header token production circuit 7272 comprises 6-bit counter 72720, AND gate 72722, and OR gate 72724. Counter 72720 has CLK terminal connected to the output of AND gate 72722 and RST terminal connected to receive clock signal LRCK. It also has 6-bit counter output Q1∼Q6. One of the inputs of AND gate 72722 is used to receive clock signal BCK, while the other input is connected to the most significant Q6 terminal. Consequently, when Q6 is low, clock signal BCK is output to counter CLK terminal. When Q6 goes high and thereafter, the supply of the clock signals to the counter CLK terminal is stopped until reset. Consequently, the OR gate that receives counter output Q1∼Q5 generates a high output (see token in FIG. 16) when at least one bit output of the 5-bit counter is high, that is, when the counter output is in the range of 1 to 31 (that is, during the first of all the time slots in the command field). This high OR-gate output constitutes the header token.

Finally, the SA token production part 726 shown in FIG. 13(a) has N series connected token propagation circuits 7260-1∼N corresponding to the N channels. Each token propagation circuit 7260 has a BCK terminal for receiving BCK clock signal, a BC31 terminal for receiving the time slot starting position indicating signal bc31, an enable terminal EN for receiving the channel enable signal of the corresponding channel, an input IN terminal, and an output OUT terminal. The transmitting circuit in the first stage has an input IN terminal for receiving the token from source token production part 727. In each of the following stages, the input IN terminal is connected to the OUT terminal of the previous stage. When the channel enable signal is high, the result at the output OUT terminal of each transmitting circuit is obtained by delaying the token received at the IN terminal by about 1 time slot (almost 32 BCK clock signals). When the channel enable signal is low, the token is passed undelayed to the output. The OUT terminal of 7260-N in the final stage supplies the SA token (SAN) to the next downstream device. In this way, the devices on the downstream side can use the time slots sequentially. The token generated at the OUT terminal of each transmitting circuit becomes the token sent to the next stage or the next downstream device and is used as time-slot allocating token SA1∼SAN in that device. Also, when the channel enable signals of both ch1 and ch2 go high, it means that two channels, that is, two time slots are used. It does not mean that the time slots represented by ch1 and ch2 in FIG. 12 must be used. Consequently, when the device on the upstream of the given device uses ch1 and ch2 shown in FIG. 12, the ch1 and ch2 used by the device concerned are equivalent to the time slots represented by ch3 and ch4 shown in FIG. 12.

More specifically, as shown in FIG. 15, each transmitting circuit 7260 is comprised of multiplexer (MUX) 72600 and an enable control D-type F/F 72602. One of the inputs of MUX 72600 is connected to the IN terminal of the transmitting circuit, while the other input is connected to the Q output of F/F 72602. The control input is connected to the EN terminal. In this way, when the EN terminal is low, the token received at the IN terminal is passed directly. If the EN terminal is high, the output of the MUX, that is, the token at the IN terminal delayed by one time slot is passed to the Q output of the F/F. The D terminal of F/F 72602 is connected to the IN terminal, and the EN terminal is connected to receive bc31. Also, the F/F has a CLK terminal connected to receive clock BCK. The input signal is latched only when EN is high. Consequently, the F/F will generate a high signal during the next time slot if the signal input from the IN terminal is high if signal bc31 is high. Also, the setting of the channels used by the device concerned is stored in register 7210 as described above.

In the following, the overall operation of time-slot allocating circuit 72 will be explained with reference to the timing diagrams shown in FIGS. 16-21.

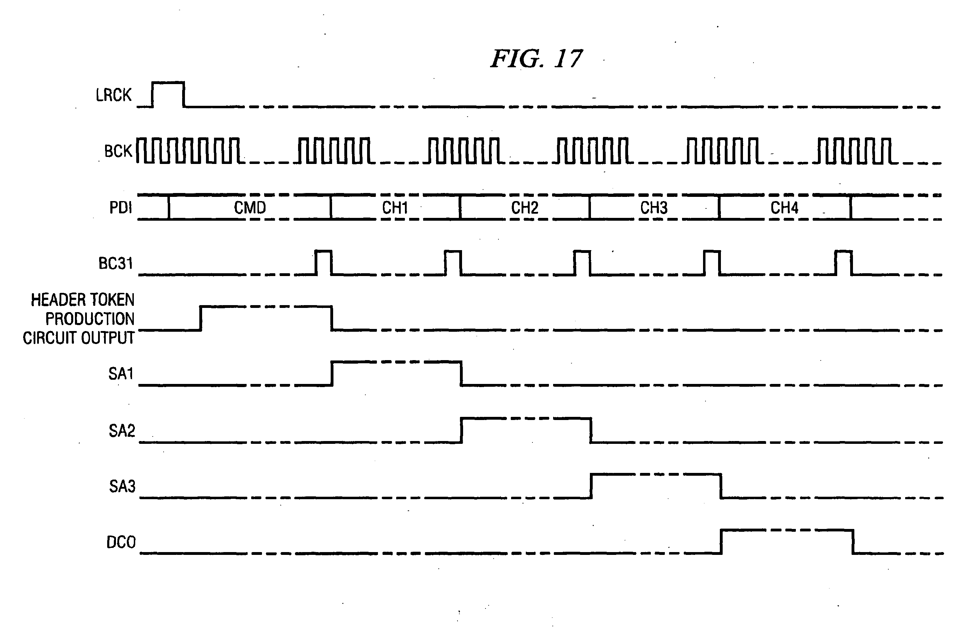

First, the operation of a device example, such as the header device, will be explained with reference to FIGS. 16-20. As shown in FIGS. 17-20, the device has a 4-channel processing part. FIG. 16 shows the case in which the header device uses channel ch1 and other channels not shown in the figure except for ch2. More specifically, with the clock signals LRCK and BCK shown in the figure, 5-bit counter 7200 counts as shown in the figure and generates bc31 signal that goes high at the end of each time slot to indicate the end of each time slot. Then, header token production circuit 7272 generates a header token during the first time slot, as shown in the figure. Since the header device uses ch1, ch1 enable signal is high. As a result, token propagation circuit 7260-1 generates a token SA1 delayed by 1 slot at its output. In response to the token, the header device latches and stores the contents of shift register 7240 (data of channel ch1) in register 7250-1. Since ch2 enable signal is low, the next token propagation circuit 7260-2 that receives token SA1 passes SA1 undelayed as token SA2. At that time, the output of AND gate 7220-2 stays low since the ch2 enable signal is low. Consequently, no latching of register 7250-2 occurs. After using other channels, the header device finally generates a token to the downstream at DCO port. In this way, the device can only receive the channel data of the time slots used.

FIG. 17 shows the case in which the header device uses four channels ch1-ch4 (the channel enable signals of ch1-ch4 are high). In this case, since the enable signals of ch1-ch4 are high, as shown in the figure, each of SA1, SA2, SA3, SA4 (=DCO) is delayed by one slot from the header token. At that time, since the outputs of AND gates 7220-1∼4 are high, latching of registers 7250-1∼4 occurs. Also, token SA4 is output to the DCO port as the token to the downstream device. In this case, variable time-division multiplex communication can be realized since multiple time slots can be used by each device.

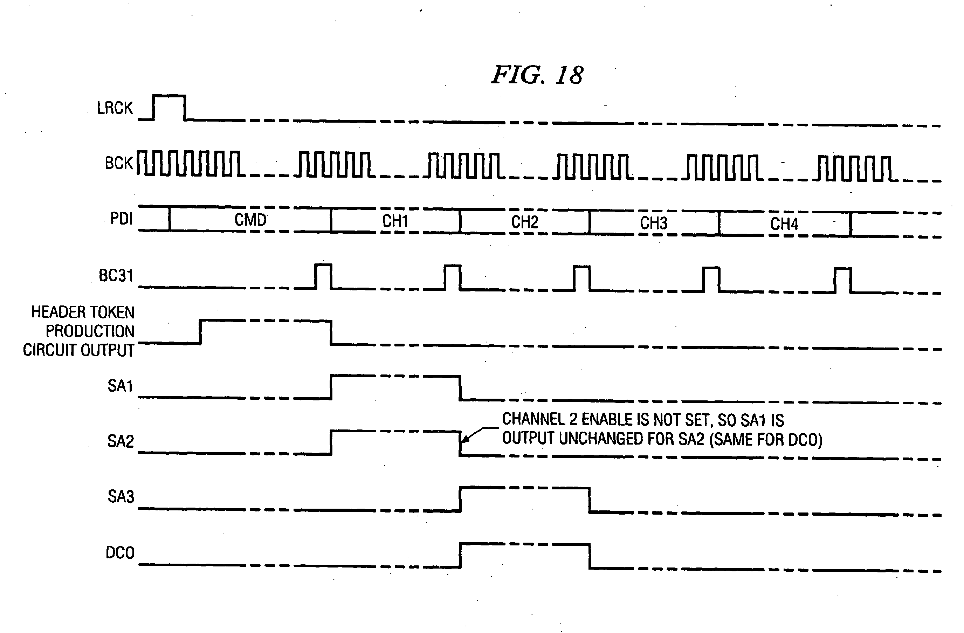

FIG. 18 is a timing diagram illustrating the case when the header device uses two channels as a function of the high enable signals for ch1 and ch3. In this case, since ch2 enable signal is low, token SA2 is the same as token SA1. At that time, since ch3 enable signal is high for AND gate 7220-3, register 7250-3 latches the data in the ch2 audio channel field into ch3 register 7250-3 instead of ch2 register 7250-2. Consequently, when two or more received channels are used by one device, the enabled channels are not necessarily consecutive. Under certain conditions, if ch2 and ch4 in the device are not used or if ch1 and ch3 as well as ch2 and ch4 in the device use the same data, such a setting can improve the data transmission efficiency of the master device. In this way, any channel can be specified and used, and there is no need to perform wasted data transmission. In the present example, the number of time slots used is 2.

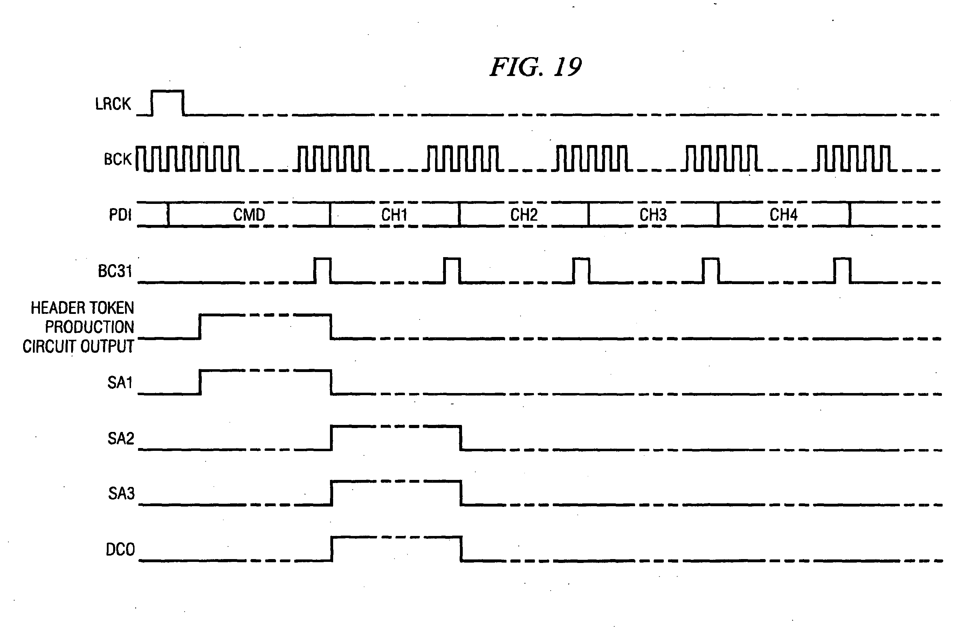

FIG. 19 is a timing diagram illustrating the case when only ch2 enable signal is high in the header device. In this case, since ch1 enable signal is low, SA1 is equal to the header token. SA2 is obtained by delaying SA1 by one slot. After that, SA3, etc. is equal to SA2 with no delay. In this case, since only the output of AND gate 7220-2 is high, ch2 register 7250-2 receives the data in ch1 audio channel field. This is an example of using only ch2 of the four channels set in the device.

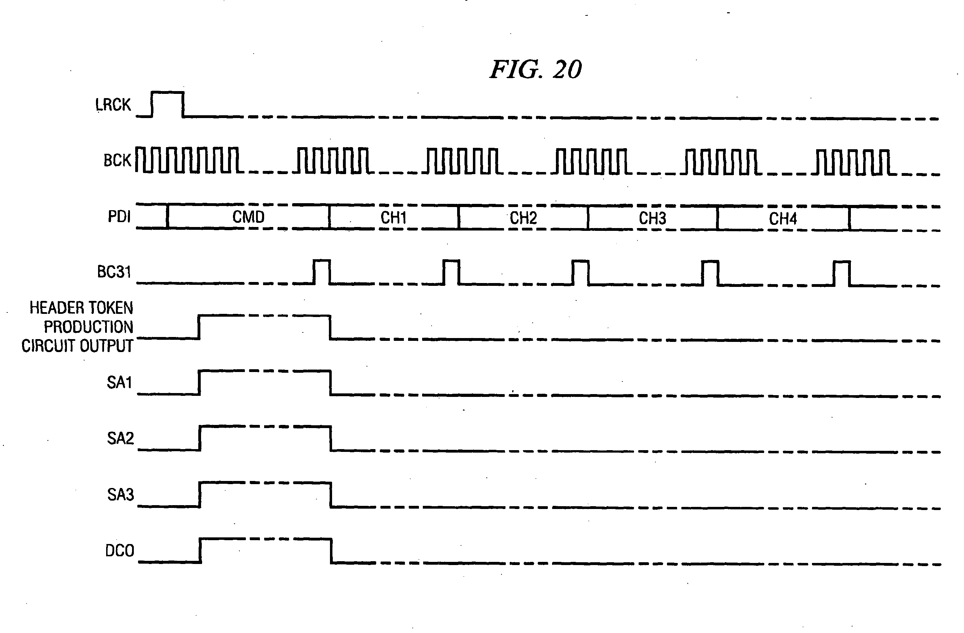

FIG. 20 is a timing diagram illustrating the case in which all of the ch enable signals of the device are low; that is, none of the time slots is used. In this case, the header token is transmitted directly to the downstream devices as SA1, SA2, SA3, etc. without being delayed. This use mode can be used when none of the devices is used under certain conditions or when connection of the daisy chain is necessary but there is no need to use any time slot without performing any inputs or outputs. In this case, the number of time slots used is 0. As described above, since use or no use can be set for each channel in a device to avoid wasted data transmission, the transmission efficiency can be improved.

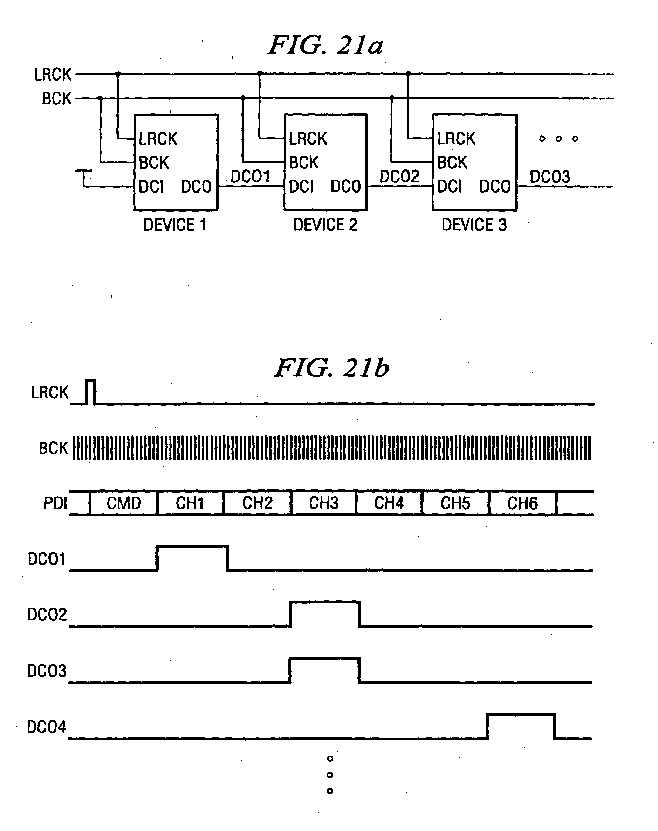

FIG. 21 is a timing diagram illustrating sending/receiving of SA tokens between multiple devices. It shows an example in which multiple devices are cascade-connected as shown in FIG. 21(a). Also, device 1 uses 1 channel, device 2 uses 2 channels, device 3 uses none of the channels, and device 4 uses 3 channels. In this case, as shown in the timing diagram of FIG. 21 (b), by using ch1 audio channel field, device 1 generates a token delayed by 1 time slot from the header token at output DCO1. Then, since device 2 uses 2 channels, a token that is further delayed by 2 slots is generated at DCO2. Since device 3 uses no slots, the output token of device 2 is directly output to DCO3 without being delayed. Then, since device 4 uses 3 channels, a token delayed by another 3 slots from the token sent from device 3 is generated at DCO4. In this way, the time-slot allocating token can be transmitted sequentially by using the daisy chain between the devices. Also, since the number of time slots used for each device can be set as desired, in the present example, device 2 has a transmission band twice as wide as that of device 1, and device 4 has a transmission band three times as wide as that of device 1. The transmission band of device 3 is zero. As described above, according to the present invention, variable time-division multiplex communication can be realized using elements configured in a daisy chain.

Data transmission from DSP 1B to IN devices was explained above. Data transmission from OUT devices to DSP 1B can be realized in the same way as described above. The difference is that data sent out to register 7250 are used, and the data are transferred to shift register 7240 and output from the PDO port at the beginning of the allocated slot. Receiving/transmitting of other time slot allocating (SA) tokens and use of the channel enable signals are the same. As can be seen from the aforementioned explanation, the IN device group and the OUT device group can operate at the same time since they have separate daisy chains so that assigning of the device identifiers and transmission of time-slot allocating tokens can be performed for these groups independently of each other.

A preferred embodiment of the present invention was explained above. This embodiment, however, can be modified in various ways. First, the number of daisy chains can be selected as desired as two or more corresponding to the number of device groups. In this case, it is necessary to store the identifier or number of the daisy chain connection line as the device group identifier in the devices of each daisy chain group. Second, besides DSPs, other programmable devices, such as microprocessors, can be used as the master device. The serial port can be used for data transmission with the slave devices. Third, the device identifiers of the slave devices can also be transmitted from the slave devices to the master device instead of being prestored in the memory of the master device. This can be realized by reading the internal registers of the slave devices.

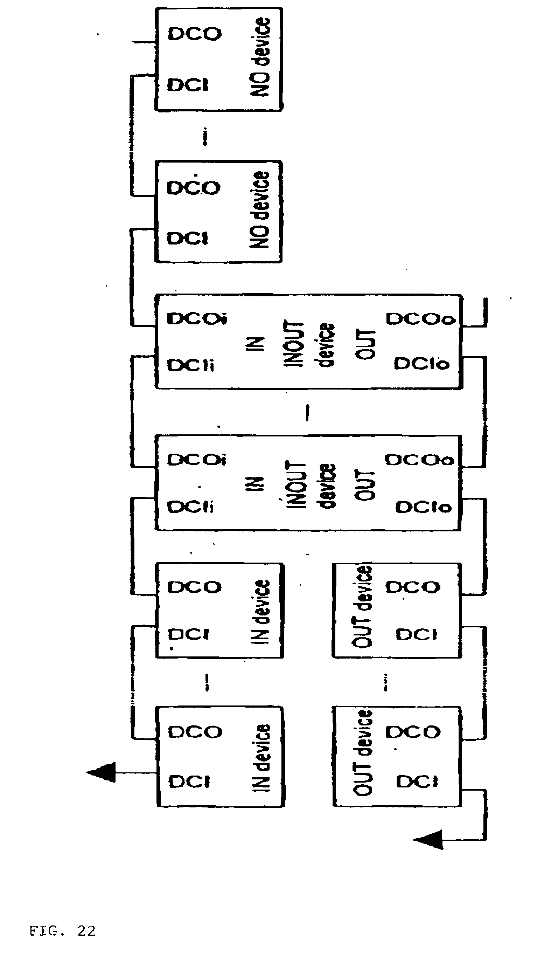

Fourth, as shown in FIG. 22, the same device can be connected in two or more daisy chains. For example, the figure shows a case in which the slave device is an IN/OUT device, such as a codec. In this case, it is possible to use only one device ID assignment circuit 70, while it is necessary to set up two groups of time-slot assignment circuits 72. This is because, since the device ID is used for transmitting/receiving of the command field, it can be distinguished from the master side, and thus only one assignment circuit is necessary. However, since the audio channel fields are independent of each other on the receiving side (IN side) and the transmitting side (OUT side), two daisy chains are required. Fifth, as described above, since the number of slots assigned to each slave device is variable, variable transmission band that is different for each slave device can be realized.

Sixth, a serial bus is used in the aforementioned embodiment. However, it is also possible to use parallel buses. Seventh, the aforementioned embodiment discloses an example of setting the time-slot allocating sequence of the bus as the "prescribed sequence." The present invention, however, can be applied to other source allocation sequences. Eighth, the aforementioned system is an audio system. The present invention, however, can also be applied to other systems (such as LANs, ATMs, remote monitoring systems, automatic measuring apparatuses, etc.). Ninth, the aforementioned slave devices are DACs, ADCs, etc. However, other integrated circuit chips or other types and scales of circuits, units, devices, machines (such as terminals, computers, cameras, microphones, temperature sensors, humidity sensors, pressure sensors, actuators, etc.) can also be used as slave devices.

As explained above, according to the present invention, identifiers can be automatically assigned to integrated circuit chips or other devices. Also, since identifiers can be assigned freely to devices, different device identifiers can be assigned to the same type of chip. In this way, multiple chips of the same type can be used or supported in the same system. As a result, there is no need to burn the device identifiers or addresses for the chips in ROM during chip manufacturing or assign special device identifiers to specific device types. Also, it becomes unnecessary to assign the device identifiers to the devices from the outside. In this way, since the design of circuits or other systems is not limited by the intrinsic device identifiers of the chips, the same type of chip can be exchanged between different manufacturers.

Compared with the redundant intrinsic device identifiers used in the conventional method, the device identifiers of the present invention assigned to circuits or other systems are simple numbers. Consequently, the device identifiers can be used directly to form the optimum addresses or can also be used as the sequential numbers of an allocation sequence of a sharable resource in the system.

If the aforementioned sequential numbers are used for a sharable resource, the resource can be used efficiently. Also, variable time-division multiplex communication can be realized if the sharable resource is the time slot for use of the bus. In addition, when the number of the allocated time slots is variable, in spite of the coexistence of the devices that do not use the sharable resource of the bus, the devices that use the sharable resource, and the devices that use the sharable resource at a high frequency (IN device (DAC), OUT device (ADC), IN/OUT device (CODEC)), it is still possible to optimize the communication traffic of these devices (with little redundance).

## Claims

1. A communication system for carrying out communication among multiple devices, the multiple devices comprising a master device (1) and one or more groups (SDG1-N) of multiple slave devices (30-1-1...30-1-N, 30-2-1...30-2-N), said communication system comprising:
buses (5) that connect the multiple devices to each other and daisy chain connection lines (7-1...7-N) that connect the multiple devices into a daisy chain (DC1);
wherein the buses connect the master device (1) and each of the one or more groups (SDG1-N) of multiple slave devices (30-1-1...30-1-N, 30-2-1...30-2-N);
wherein the daisy chain connection lines (7-1...7-N) connect each of the one or more groups of multiple slave devices in a daisy chain (DC1);
wherein the daisy chain connection lines (7-1...7-N) are used to assign a device identifier to each of the multiple slave devices (30-1-1...30-1-N, 30-2-1...30-2-N) for identifying the number of each device among the multiple slave devices or identifying the number of a device in a prescribed order in the system,
**characterized in that** the communication is carried out as time-division multiplex communication.

2. The communication system described in Claim 1, further comprising an apparatus (70, 70-2B) for assigning device identifiers to the one or more groups of multiple slave devices;
said apparatus for assigning device identifiers (70, 70-2B) comprises:
a device identifier assigning token generating means (704), which is set in the most upstream device positioned at the most upstream portion of the daisy chain in the one or more groups of multiple slave devices to send out a device identifier assigning token at a first time point to the downstream of the daisy chain, with the most upstream device having the first device identifier;
a memory means that is set in the most upstream device to store the first device identifier;
a time measuring means (701), which is set in each downstream device located downstream of the daisy chain to measure the time difference between the first and second time points when the device identifier assigning token is received at the second time point;
a determining means, which is set in each downstream device to determine the device identifier of each downstream device on the basis of the measured time difference; and
a memory means that is set in each downstream device to store the determined device identifier; in this way, the multiple devices can be identified by using the first device identifier of the most upstream device and each of the device identifiers that are determined for each of the downstream devices and are different from the first device identifier.

3. The communication system described in Claim 2, wherein the communication is carried out in at least two different transmission bands.

4. The communication system described in Claim 3, wherein the communication is carried out using consecutive time slots, and the different transmission bands are realized by different numbers of time slots in a prescribed time frame.

5. The communication system described in Claim 4, wherein the daisy chain connection lines (DC1) are used to transfer time-slot allocating token used for allocating time slots to each of the one or more groups of multiple slave devices(30-1-1...30-1-N, 30-2-1...30-2-N).

6. The communication system described in Claim 5,
wherein for each of the group of multiple slave devices (30-1-1...30-1-N, 30-2-1...30-2-N), when the time-slot allocation token is transferred among the one or more groups of multiple slave devices and when a specific slave device receiving the time-slot allocating token uses the time slots, use of the time slots is started when the time-slot allocating token is received; said time slots are used only in the number of time slots used; when use of the time slots in the number of time slots used is finished, use of the time slots is completed; since the time slot that comes after the last time slot used among the aforementioned time slots is allocated to the next slave device connected in the daisy chain among the groups of multiple slave devices, the time-slot allocating token is transferred to the next slave device.

7. A device identifier assignment method for assigning device identifiers to multiple devices (1; 30-1-1...30-1-N, 30-2-1...30-2-N) amongst which time division multiplex communication is carried out, said method comprises the steps:
connecting the multiple devices in a daisy chain (DC1);
sending a device identifier assigning token at a first time point from the most upstream device located in the most upstream portion of the daisy chain among the multiple devices to the downstream of the daisy chain, with the most upstream device having the first device identifier;
each of the downstream devices located downstream of the daisy chain, receiving the device identifier assigning token at a second time point; and
each downstream device determining the given device identifier that is different from the first device identifier on the basis of the time difference between the first and second time points;
identifying the multiple devices by using the aforementioned first device identifier of the most upstream device and each of the device identifiers that are determined for each of the downstream devices and that are different from the first device identifier.

## Patentansprüche

1. Kommunikationssystem zum Ausführen einer Kommunikation zwischen mehreren Vorrichtungen, wobei die mehreren Vorrichtungen eine Master-Vorrichtung (1) und eine oder mehrere Gruppen (SDG1-N) aus mehreren Slave-Vorrichtungen (30-1-1, ..., 30-1-N, 30-2-1, ..., 30-2-N) umfassen, wobei das Kommunikationssystem umfasst:
Busse (5), die die mehreren Vorrichtungen miteinander verbinden, und Daisy-Chain-Verbindungsleitungen (7-1, ..., 7-N), die die mehreren Vorrichtungen zu einer Daisy-Chain (DC1) verbinden;
wobei die Busse die Master-Vorrichtung (1) und jede der einen oder mehreren Gruppen (SDG1-N) aus mehreren Slave-Vorrichtungen (30-1-1, ..., 30-1-N, 30-2-1, ..., 30-2-N) verbinden;
wobei die Daisy-Chain-Verbindungsleitungen (7-1, ..., 7-N) jede der einen oder mehreren Gruppen aus mehreren Slave-Vorrichtungen in einer Daisy-Chain (DC1) verbinden;
wobei die Daisy-Chain-Verbindungsleitungen (7-1, ..., 7-N) verwendet werden, um jeder der mehreren Slave-Vorrichtungen (30-1-1, ..., 30-1-N, 30-2-1, ..., 30-2-N) einen Vorrichtungsidentifizierer zuzuweisen, um die Nummer jeder Vorrichtung der mehreren Slave-Vorrichtungen zu identifizieren oder um die Nummer einer Vorrichtung in einer vorgeschriebenen Reihenfolge in dem System zu identifizieren,
**dadurch gekennzeichnet, dass** die Kommunikation als Zeitmultiplex-Kommunikation ausgeführt wird.

2. Kommunikationssystem nach Anspruch 1, das ferner eine Vorrichtung (70, 70-2B) umfasst, um einer oder mehreren Gruppen aus mehreren Slave-Vorrichtungen Vorrichtungsidentifizierer zuzuweisen;
wobei die Vorrichtung zum Zuweisen von Vorrichtungsidentifizierern (70, 70-2B) umfasst:
ein Mittel (704) zum Erzeugen eines Vorrichtungsidentifiziererzuordnungs-Tokens, das in der am weitesten stromaufseitigen Vorrichtung, die in dem am weitesten stromaufseitigen Abschnitt der Daisy-Chain in der einen oder den mehreren Gruppen aus mehreren Slave-Vorrichtungen positioniert ist, gesetzt ist, um ein Vorrichtungsidentifiziererzuordnungs-Token in stromabwärtiger Richtung der Daisy-Chain zu einem ersten Zeitpunkt auszusenden, wobei die am weitesten stromaufseitige Vorrichtung den ersten Vorrichtungsidentifizierer besitzt;
ein Speichermittel, das in der am weitesten stromaufseitigen Vorrichtung gesetzt ist, um den ersten Vorrichtungsidentifizierer zu speichern;
ein Zeitmessmittel (701), das in jeder stromabseitigen Vorrichtung, die in der Daisy-Chain stromabseitig vorhanden ist, gesetzt ist, um die Zeitdifferenz zwischen dem ersten und einem zweiten Zeitpunkt zu messen, wenn das Vorrichtungsidentifiziererzuordnungs-Token zu dem zweiten Zeitpunkt empfangen wird;
ein Bestimmungsmittel, das in jeder stromabseitgen Vorrichtung gesetzt ist, um den Vorrichtungsidentifizierer jeder stromabseitgen Vorrichtung anhand der gemessenen Zeitdifferenz zu bestimmen; und
ein Speichermittel, das in jeder stromabseitgen Vorrichtung gesetzt ist, um den bestimmten Vorrichtungsidentifizierer zu speichern; wobei auf diese Weise die mehreren Vorrichtungen unter Verwendung des ersten Vorrichtungsidentifizierers der am weitesten stromaufseitigen Vorrichtung und jedes der Vorrichtungsidentifizierer, die für jede der stromabseitigen Vorrichtungen bestimmt werden und von dem ersten Vorrichtungsidentifizierer verschieden sind, identifiziert werden können.

3. Kommunikationssystem nach Anspruch 2, wobei die Kommunikation in wenigstens zwei verschiedenen Übertragungsbändern ausgeführt wird.

4. Kommunikationssystem nach Anspruch 3, wobei die Kommunikation unter Verwendung aufeinander folgender Zeitschlitze ausgeführt wird und die verschiedenen Übertragungsbänder durch eine jeweils unterschiedliche Anzahl von Zeitschlitzen in einem vorgeschriebenen Zeitrahmen verwirklicht sind.

5. Kommunikationssystem nach Anspruch 4, wobei die Daisy-Chain-Verbindungsleitungen (DC1) verwendet werden, um ein Zeitschlitzzuweisungs-Token zu übertragen, das verwendet wird, um jeder der einen oder der mehreren Gruppen aus mehreren Slave-Vorrichtungen (30-1-1, ..., 30-1-N, 30-2-1, ..., 30-2-N) Zeitschlitze zu zuzuweisen.

6. Kommunikationssystem nach Anspruch 5,
wobei für jede der Gruppe aus mehreren Slave-Vorrichtungen (30-1-1, ..., 30-1-N, 30-2-1, ..., 30-2-N) dann, wenn das Zeitschlitzzuweisungs-Token zwischen der einen oder den mehreren Gruppen aus mehreren Slave-Vorrichtungen übertragen wird und wenn eine spezifische Slave-Vorrichtung, die das Zeitschlitzzuweisungs-Token empfangt, die Zeitschlitze verwendet, die Verwendung der Zeitschlitze gestartet wird, wenn das Zeitschlitzzuweisungs-Token empfangen wird; die Zeitschlitze nur in der Anzahl verwendeter Zeitschlitze verwendet werden; dann, wenn die Verwendung der Zeitschlitze in der Anzahl verwendeter Zeitschlitze beendet ist, die Verwendung der Zeitschlitze abgeschlossen ist; wobei, da der Zeitschlitz, der auf den letzten Zeitschlitz folgt, der von den genannten Zeitschlitzen verwendet wurde, der nächsten Slave-Vorrichtung zugewiesen ist, die in der Daisy-Chain in den Gruppen aus mehreren Slave-Vorrichtungen angeschlossen ist, das Zeitschlitzzuweisungs-Token zu der nächsten Slave-Vorrichtung übertragen wird.

7. Vorrichtungsidentifizierer-Zuweisungsverfahren zum Zuweisen von Vorrichtungsidentifizierern zu mehreren Vorrichtungen (1; 30-1-1, ..., 30-1-N, 30-2-1, ..., 30-2-N), zwischen denen eine Zeitmultiplex-Kommunikation ausgeführt wird, wobei das Verfahren die folgenden Schritte umfasst:
Verbinden der mehreren Vorrichtungen in einer Daisy-Chain (DC1);
Senden eines Vorrichtungsidentifiziererzuordnungs-Tokens zu einem ersten Zeitpunkt von der am weitesten stromaufseitigen Vorrichtung, die sich in dem am weitesten stromaufseitigen Abschnitt der Daisy-Chain unter den mehreren Vorrichtungen befindet, in Stromabwärtsrichtung der Daisy-Chain, wobei die am weitesten stromaufseitige Vorrichtung den ersten Vorrichtungsidentifizierer besitzt;
wobei jede der stromabseitigen Vorrichtungen, die sich in der Daisy-Chain stromabseitig befinden, das Vorrichtungsidentifiziererzuordnungs-Token zu einem zweiten Zeitpunkt empfängt; und
jede stromabseitige Vorrichtung den gegebenen Vorrichtungsidentifizierer, der von dem ersten Vorrichtungsidentifizierer verschieden ist, anhand der Zeitdifferenz zwischen dem ersten und dem zweiten Zeitpunkt bestimmt; und
Identifizieren der mehreren Vorrichtungen unter Verwendung des genannten ersten Vorrichtungsidentifizierers der am weitesten stromaufseitigen Vorrichtung und jedes der Vorrichtungsidentifizierer, die für jede der stromabseitigen Vorrichtungen bestimmt werden und die von dem ersten Vorrichtungsidentifizierer verschieden sind.

## Revendications

1. Système de communication destiné à exécuter une communication parmi de multiples dispositifs, les multiples dispositifs comprenant un dispositif maître (1) et un ou plusieurs groupes (SDG1 - N) de multiples dispositifs esclaves (30 - 1 - 1 ... 30 - 1 - N, 30 - 2 - 1 ... 30 - 2 - N), ledit système de communication comprenant :
des bus (5) qui connectent entre eux les multiples dispositifs et des lignes de connexion en guirlande (7 - 1 ... 7 - N) qui connectent les multiples dispositifs en une guirlande (DC1) ;
dans lequel les bus connectent le dispositif maître (1) et chacun du ou des groupes (SDG1 - N) de multiples dispositifs esclaves (30 - 1 - 1 ... 30 - 1 - N, 30 - 2 - 1 ... 30 - 2 - N) ;
dans lequel les lignes de connexion en guirlande (7 - 1 ... 7 - N) connectent chacun du ou des groupes de multiples dispositifs esclaves en une guirlande (DC1) ;
dans lequel les lignes de connexion en guirlande (7 - 1 ... 7 - N) sont utilisées de manière à attribuer un identifiant de dispositif à chacun des multiples dispositifs esclaves (30 - 1 - 1 ... 30 - 1 - N, 30 - 2 - 1 ... 30 - 2 - N) de façon à identifier le numéro de chaque dispositif parmi les multiples dispositifs esclaves ou à identifier le numéro d'un dispositif dans un ordre prescrit dans le système,
**caractérisé en ce que** la communication est exécutée comme une communication à multiplexage dans le temps.

2. Système de communication selon la revendication 1, comprenant en outre un appareil (70, 70 - 2B) destiné à attribuer des identifiants de dispositif aux un ou plusieurs groupes de multiples dispositifs esclaves ;
ledit appareil destiné à attribuer des identifiants de dispositif (70, 70 - 2B) comprend :
des moyens de génération de jeton d'attribution d'identifiant de dispositif (704), qui sont placés dans le dispositif le plus en amont positionné au niveau de la partie la plus en amont de la guirlande dans le ou les groupes de multiples dispositifs esclaves de manière à envoyer un jeton d'attribution d'identifiant de dispositif à un premier point de temps vers l'aval de la guirlande, le dispositif le plus en amont ayant le premier identifiant de dispositif ;
des moyens de mémoire qui sont placés dans le dispositif le plus en amont de manière à stocker le premier identifiant de dispositif ;
des moyens de mesure de temps (701), qui sont placés dans chaque dispositif en aval situé en aval de la guirlande de manière à mesurer la différence de temps entre les premier et deuxième points de temps lorsque le jeton d'attribution d'identifiant de dispositif est reçu au deuxième point de temps ;
des moyens de détermination, qui sont placés dans chaque dispositif en aval de manière à déterminer l'identifiant de dispositif de chaque dispositif en aval sur la base de la différence de temps mesurée ; et
des moyens de mémoire qui sont placés dans chaque dispositif en aval de manière à stocker l'identifiant de dispositif déterminé ; de cette façon, il est possible d'identifier les multiples dispositifs à l'aide du premier identifiant de dispositif du dispositif le plus en amont et de chacun des identifiants de dispositif qui sont déterminés pour chacun des dispositifs en aval et sont différents du premier identifiant de dispositif.

3. Système de communication selon la revendication 2, dans lequel la communication est exécutée dans au moins deux bandes de transmission différentes.

4. Système de communication selon la revendication 3, dans lequel la communication est exécutée à l'aide de tranches de temps consécutives, et les bandes de transmission différentes sont réalisées par différents nombres de tranches de temps dans une trame de temps prescrite.

5. Système de communication selon la revendication 4, dans lequel les lignes de connexion en guirlande (DC1) sont utilisées de manière à transférer le jeton d'attribution de tranche de temps utilisé afin d'attribuer des tranches de temps à chacun du ou des groupes de multiples dispositifs esclaves (30 - 1 - 1 ... 30 - 1 - N, 30 - 2 - 1 ... 30 - 2 - N).

6. Système de communication selon la revendication 5, dans lequel pour chaque groupe de multiples dispositifs esclaves (30 - 1 - 1 ... 30 - 1 - N, 30 - 2 - 1 ... 30 - 2 - N), lorsque le jeton d'attribution de tranche de temps est transféré parmi le ou les multiples groupes de dispositifs esclaves et quand un dispositif esclave spécifique qui reçoit le jeton d'attribution de tranche de temps utilise les tranches de temps, l'utilisation des tranches de temps est démarrée lorsque le jeton d'attribution de tranche de temps est reçu ; lesdites tranches de temps ne sont utilisées que dans le nombre de tranches de temps utilisées ; lorsque l'utilisation des tranches de temps dans le nombre de tranches de temps utilisées est terminée, l'utilisation des tranches de temps prend fin ; étant donné que la tranche de temps qui vient après la dernière tranche de temps utilisée parmi les tranches de temps mentionnées ci-dessus, est attribuée au prochain dispositif esclave connecté dans la guirlande parmi les groupes demultiples dispositifs esclaves, le jeton d'attribution de tranche de temps est transféré au prochain dispositif esclave.

7. Procédé d'attribution d'identifiant de dispositif destiné à attribuer des identifiants de dispositif à de multiples dispositifs (1 ; 30 - 1 - 1 ... 30 - 1 - N, 30 - 2 - 1 ... 30 - 2 - N) parmi lesquels une communication à multiplexage dans le temps est exécutée, ledit procédé comprenant les étapes consistant à :
connecter les multiples dispositifs en une guirlande (DC1) ;
envoyer un jeton d'attribution d'identifiant de dispositif à un premier point de temps à partir du dispositif le plus en amont situé dans la partie la plus en amont de la guirlande parmi les multiples dispositifs vers l'aval de la guirlande, le dispositif le plus en amont ayant le premier identifiant de dispositif ;
chacun des dispositifs en aval situés en aval de la guirlande, recevant le jeton d'attribution d'identifiant de dispositif à un deuxième point de temps ; et
chaque dispositif en aval déterminant l'identifiant de dispositif donné qui est différent du premier identifiant de dispositif sur la base de la différence de temps entre les premier et deuxième points de temps ;
identifier les multiples dispositifs à l'aide du premier identifiant de dispositif mentionné ci-dessous du dispositif le plus en amont et de chacun des identifiants de dispositif qui sont déterminés pour chacun des dispositifs en aval et qui sont différents du premier identifiant de dispositif.
